# EUROPEAN PATENT SPECIFICATION

(11) **EP 3 718 898 B1**
(45) Date of publication and mention of the grant of the patent: **22.01.2025**
(21) Application number: 20163250.2
(22) Date of filing: 16.03.2020
(51) Int. Cl.: B64D 13/06, B64D 37/32, B64D 25/00

(54) **REUSE OF WASTE OXYGEN ENRICHED AIR IN AN AIRCRAFT**
WIEDERVERWENDUNG VON MIT VERBRAUCHTEM SAUERSTOFF ANGEREICHERTER LUFT IN EINEM FLUGZEUG
RÉUTILISATION D'AIR ENRICHI EN OXYGÈNE REJETÉ DANS UN AÉRONEF

(30) Priority: 05.04.2019 US 201916376532
(43) Date of publication of application: 07.10.2020
(73) Proprietor: The Boeing Company, Arlington, VA 22202 (US)
(72) Inventor: ONUR, Can, Chicago, Illinois 60606 (US); VOS, Maxim Constantijn, Chicago, Illinois 60606 (US)
(74) Representative: Bryn-Jacobsen, Caelia

(56) References cited:
- EP-A1- 1 375 349
- EP-A1- 3 159 265
- EP-A2- 2 351 600
- EP-A2- 2 785 591
- US-A1- 2011 062 288

## Description

### Field

This disclosure relates to the field of aircraft, and more particularly, to oxygen delivery on an aircraft.

### Background

Some aircraft include an Environmental Control System (ECS) that supplies oxygen, thermal control, and cabin pressurization for the crew and passengers. In an ECS, air is compressed to high pressure and temperature, such as with bleed air from the compressor stage of an engine. The compressed air is fed to an Environmental Control Unit (ECU) via a flow control valve, where the air is conditioned by heat exchangers and an Air-Cycle Machine (ACM), if needed, that cools the air to a desired temperature. The conditioned air is then delivered to the cabin and cockpit at the desired temperature and pressure.

A pressurized aircraft also includes an emergency oxygen system that activates in the event that the cabin becomes depressurized. For a typical emergency oxygen system, oxygen masks will automatically deploy above or in front of the passenger seats and crew seats. Oxygen is supplied to the masks with a chemical oxygen generator or a gaseous manifold system. The chemical oxygen generator uses an exothermic reaction (e.g., igniting a mixture of sodium chlorate and iron powder) to create a supply of oxygen. The gaseous manifold system uses one or more tanks of oxygen, usually stored in the cargo hold, to supply the oxygen.

It may be desirable to identify other ways of supplying or supplementing oxygen to an ECS, the emergency oxygen system, or other subsystems of an aircraft.

EP 1375349A1 in an abstract states "A gas generation method and apparatus, capable of use in an aircraft, generates oxygen with at least one On Board Oxygen Generating System (OBOGS) (170,180,190) and generates an inert gas with at least one On Board Inert Gas Generating System (OBIGGS) (130,140) and selectively supplies an auxiliary supply of inert gas utilizing a waste gas output of the at least one OBOGS. The inert gas can include nitrogen. An auxiliary source of oxygen can also be provided. Control valves (160,250) can be used to selectively supply the waste gas output of the at least one OBOGS to the atmosphere or to cither of two locations. The oxygen can be used in a passenger compartment (340) of the aircraft and the inert gas use in either a fuel tank (320) or cargo bay (330) of the aircraft."

EP3159265A1 in an abstract states "An aircraft air supply system may include a primary duct (116) to supply a primary air flow to a flight deck (102) of an aircraft. A nitrogen generating system (118) may be configured for generating nitrogen enriched air and oxygen enriched air. A secondary duct (130) may be provided for channeling the oxygen enriched air from the nitrogen generating system (118) to the primary duct (116). The flow of the oxygen enriched air into the primary duct (116) and to the flight deck (102) may be controlled to reduce an effective altitude of the flight deck (102)."

EP2785591A2 in an abstract states "An on board inert gas generation system for an aircraft receives air from a relatively low pressure source such as low pressure engine bleed air or ram air and passes it to a positive displacement compressor (20) to increase the pressure thereof to be suitable for supply to an air separation module (24). The speed of the positive displacement compressor may be adjusted across a wide range in order to provide efficient operation in cruise and descent phases of aircraft flight. The operating speed of the compressor and/or the flow rate from the ASM to the space to be inerted may be controlled in accordance with at least one of the gas composition in the space to be inerted, the flight condition, and the ullage volume."

US2011/062288A1 in an abstract states "The invention pertains to an inerting system for an aircraft featuring at least one air separation module with at least one air inlet, a first air outlet and a second air outlet. The air separation module is designed for splitting an input air flow into a first air flow and a second air flow, wherein the first air flow is enriched with oxygen in comparison with the input air flow and discharged at the first air outlet and the second air flow is enriched with nitrogen in comparison with the input air flow and discharged at the second air outlet. In comparison with known inerting systems, the inerting system according to the invention is characterized in that the air inlet can be connected to an air extraction point in an air processing system and the inerting system is designed for routing the first air flow into a cabin to be air-conditioned.

### Summary

The present invention is set out in the independent claims, with some optional features set out in the claims dependent thereto.

Examples described herein reuse oxygen enriched air from an inerting system and/or a stand-alone air separator for one or more subsystems of an aircraft. An inerting system or air separator operates by separating a pressurized air stream into oxygen enriched air and an inert gas (e.g., nitrogen). In a traditional aircraft that uses an inerting system, the inert gas is fed to a fuel tank to safeguard against fire or explosion, while the oxygen enriched air is dumped through a ram duct. In the examples described herein, the oxygen enriched air is fed to an ECS, an emergency oxygen system, and/or another subsystem of the aircraft. Thus, the oxygen enriched air is not wasted, but is reused by another system of the aircraft.

The aircraft includes an oxygen supply subsystem configured to supply oxygen to a cabin of the aircraft, and an air separator configured to receive a pressurized air stream, to separate the pressurized air stream into oxygen enriched air and an inert gas, and to feed the oxygen enriched air to the oxygen supply subsystem.

In another example, the air separator is part of an inerting system configured to feed the inert gas to a fuel tank of the aircraft.

The oxygen supply subsystem comprises an emergency oxygen system, and the air separator is configured to feed the oxygen enriched air to the emergency oxygen system.

The aircraft further includes a pressure sensor configured to detect a cabin decompression event on the aircraft, and a manifold configured to feed the oxygen enriched air from the air separator to the emergency oxygen system in response to the cabin decompression event.

In another example, the emergency oxygen system includes masks configured to automatically deploy in response to the cabin decompression event.

In another example, the emergency oxygen system includes outlet vents configured to supply oxygen to particular regions within the cabin in close proximity to seats in response to the cabin decompression event.

The oxygen supply subsystem comprises an air distribution subsystem, and the air separator is configured to feed the oxygen enriched air to the air distribution subsystem.

The aircraft further includes a pressure sensor configured to detect a cabin decompression event on the aircraft, and a manifold configured to feed the oxygen enriched air from the air separator to the air distribution subsystem in response to the cabin decompression event.

The aircraft further includes an oxygen sensor configured to measure oxygen content at the oxygen supply subsystem, and preferably a regulator configured to regulate the oxygen enriched air fed to the oxygen supply subsystem based on the oxygen content.

In another example, the pressurized air stream comprises bleed air from an engine of the aircraft.

In another example, the pressurized air stream comprises compressed air from a compressor on the aircraft.

A method of supplying oxygen enriched air to an aircraft is provided. The method comprises receiving a pressurized air stream at an air separator on an aircraft, separating the pressurized air stream into oxygen enriched air and nitrogen enriched air at the air separator, feeding the nitrogen enriched air to a fuel tank of the aircraft, detecting a cabin decompression event on the aircraft, and feeding the oxygen enriched air to an emergency oxygen system in response to the cabin decompression event.

In another example, the method further comprises feeding the oxygen enriched air to an air distribution subsystem of the aircraft when a cabin decompression event is not detected.

In another example, the method further comprises measuring oxygen content in the emergency oxygen system and/or the air distribution subsystem, and regulating the oxygen enriched air fed to the emergency oxygen system and/or the air distribution subsystem based on the oxygen content.

The method further comprises feeding the oxygen enriched air to an air distribution subsystem of the aircraft in response to the cabin decompression event.

The features, functions, and advantages that have been discussed can be achieved independently in various examples or may be combined in yet other examples, further details of which can be seen with reference to the following description and drawings.

### Description of the Drawings

Some examples are now described, by way of example only, with reference to the accompanying drawings. The same reference number represents the same element or the same type of element on all drawings.
FIG. 1 depicts a side view of an aircraft in an illustrative example.
FIG. 2 is a schematic diagram of an aircraft in an illustrative example.
FIG. 3 is a schematic diagram of an ECU in an illustrative example.
FIG. 4A illustrates an air distribution subsystem in an illustrative example.
FIG. 4B is a cross-sectional view of an aircraft in an illustrative example.
FIG. 5 is a schematic diagram of an inerting system in an illustrative example.
FIG. 6 is a schematic diagram of an aircraft in another illustrative example.
FIG. 7 is a schematic diagram of an aircraft in another illustrative example.
FIG. 8 is a schematic diagram of an aircraft in another illustrative example.
FIG. 9 is a flow chart illustrating a method of supplying oxygen enriched air to an aircraft in an illustrative example.
FIG. 10 is a flow chart illustrating another method of supplying oxygen enriched air to an aircraft in an illustrative example.

### Detailed Description

The figures and the following description illustrate specific exemplary examples. It will be appreciated that those skilled in the art will be able to devise various arrangements that, although not explicitly described or shown herein, embody the principles described herein and are included within the contemplated scope of the claims that follow this description. Furthermore, any examples described herein are intended to aid in understanding the principles of the disclosure, and are to be construed as being without limitation. As a result, this disclosure is not limited to the specific examples or examples described below, but by the claims.

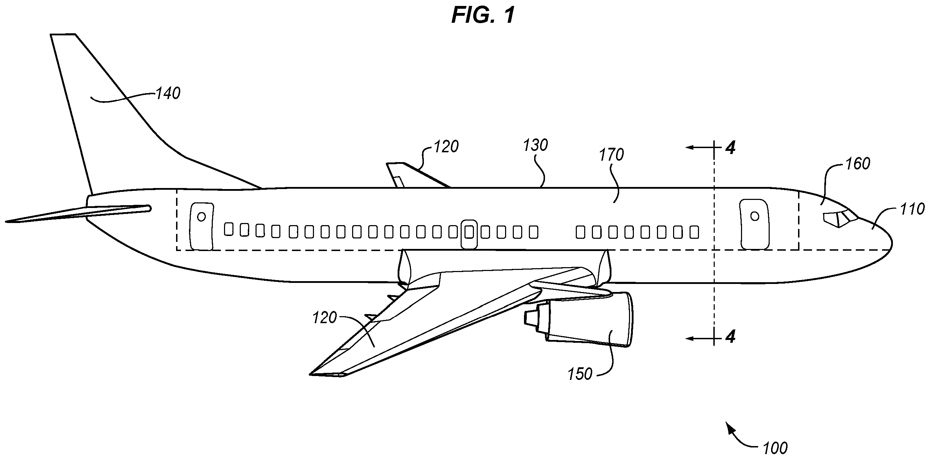

FIG. 1 depicts a side view of an aircraft 100 in an illustrative example. Aircraft 100 includes a nose 110, wings 120, a fuselage 130, a tail 140, and engines 150. Within fuselage 130 is a cockpit 160 and a cabin 170. Cockpit 160 (or flight deck) is the section or area from which pilots control aircraft 100, and includes the flight controls and flight instruments. Cabin 170 is the section or area where passengers travel, and includes rows of seats. Although aircraft 100 has been depicted to have a particular configuration for purposes of discussion, aircraft 100 may have other configurations in other examples.

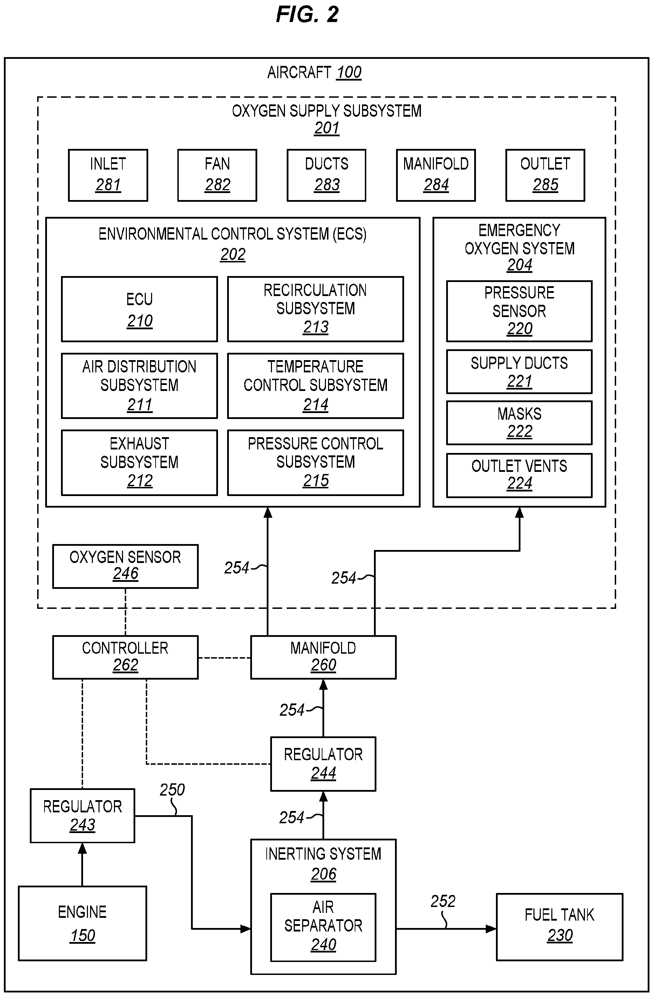

FIG. 2 is a schematic diagram of aircraft 100 in an illustrative example. It is assumed in this example that aircraft 100 is pressurized. Thus, aircraft 100 includes one or more oxygen supply subsystems 201 that are configured to supply, convey, or deliver oxygen to crew members and/or passengers within cockpit 160 and/or cabin 170. An oxygen supply subsystem 201 may have a variety of structures to delivery oxygen, which may include one or more of the following: one or more inlets 281 configured to receive a supply of oxygen, one or more fans 282 to create or control an airflow that includes the oxygen, one or more ducts 283 configured to convey an airflow to locations of cockpit 160 and/or cabin 170, one or more manifolds 284 configured to direct airflows to ducts 283 and/or control flow rate, one or more outlets 285 (e.g., outlet vents, masks, etc.) configured to release an airflow into cockpit 160 and/or cabin 170, and/or other components such as piping, hoses, etc. The structure of an oxygen supply subsystem 201 may vary depending on the type of subsystem. One example of an oxygen supply subsystem 201 is an ECS 202. ECS 202 is a system responsible for supplying air, pressurizing and ventilating cabin 170, controlling temperature, and other tasks. In this example, ECS 202 includes an Environmental Control Unit (ECU) 210, an air distribution subsystem 211, an exhaust subsystem 212, a recirculation subsystem 213, a temperature control subsystem 214, and a pressure control subsystem 215. The configuration of ECS 202 is an example, and ECS 202 may include more or less subsystems in other examples.

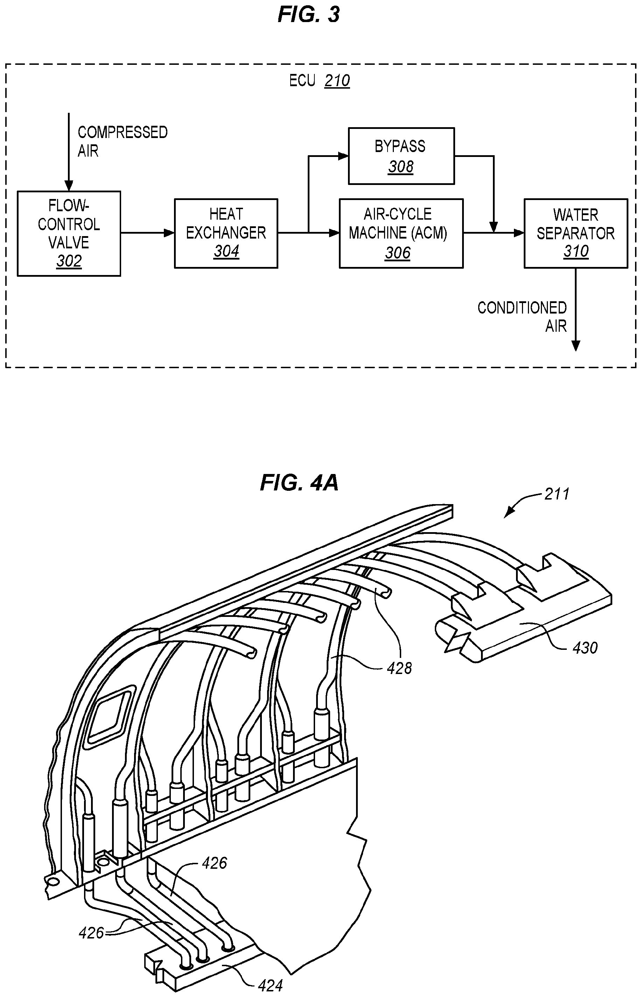

ECU 210 is configured to condition air that is supplied to cockpit 160 and/or cabin 170. FIG. 3 is a schematic diagram of ECU 210 in an illustrative example. ECU 210 includes a flow control valve 302, one or more heat exchangers 304, an Air-Cycle Machine (ACM) 306, a bypass 308, and a water separator 310. Flow control valve 302 receives compressed air, and regulates the amount of compressed air that enters cabin 170. Flow control valve 302 may receive the compressed air (i.e., bleed air) from one or more compressor stages of an engine 150 when aircraft 100 is in flight. Flow control valve 302 may receive the compressed air from an auxiliary power unit (APU), a ground cart (GCU), airport high-pressure hydrants, etc., when aircraft 100 is on the ground. The compressed air passing through flow control valve 302 travels through heat exchanger(s) 304, where it is cooled by outside air to a desired temperature. At cruising altitude where the outside air is cold, the compressed air may be cooled sufficiently by heat exchanger(s) 304 and does not need further cooling by ACM 306. Thus, the compressed air travels through bypass 308 instead of through ACM 306. At lower altitudes or on the ground, the compressed air may be further cooled by traveling through ACM 306, which includes one or more air conditioning packs. The compressed air then travels through water separator 310, which controls the moisture level of the air. The air leaving ECU 210 is "conditioned air", that is fed to air distribution subsystem 211 (see FIG. 2). The configuration of ECU 210 is an example, and ECU 210 may include more or less elements in other examples.

In FIG. 2, air distribution subsystem 211 is configured to distribute the conditioned air from ECU 210 to cockpit 160 and cabin 170. Air distribution subsystem 211 may distribute the conditioned air to different zones of aircraft 100, and each zone may have its own ducting system to provide independent temperature control for each zone. For example, a narrow-body aircraft may have two zones; one for cockpit 160 and one for cabin 170. A wide-body aircraft may have multiple zones for cabin 170 that are each independently temperature controlled (e.g., one for first class, one for business class, and one for economy). Exhaust subsystem 212 (which may be considered part of air distribution subsystem 211) removes air from cockpit 160 and cabin 170. Air is generally exhausted from cabin 170 through floor-level grilles or exhaust vents that run the length of cabin 170 on both sides along a sidewall. FIG. 4A illustrates an air distribution subsystem 211 in an illustrative example. Distribution of air is managed with a system of air ducts throughout cabin 170. Typically, air is ducted to and released from overhead vents, where it circulates and flows out floor-level exhaust vents. Ducting is hidden below the cabin floor and behind walls and ceiling panels depending on the aircraft. In this example, air distribution subsystem 211 may include a mixing manifold 424, one or more riser ducts 426, one or more overhead supply ducts 428, one or more overhead ducts 430, and one or more outlet vents or overhead vents, which is not visible in FIG. 4A. Although not shown, air distribution subsystem 211 may further include recirculation filters, one or more fans, plenum assemblies, etc.

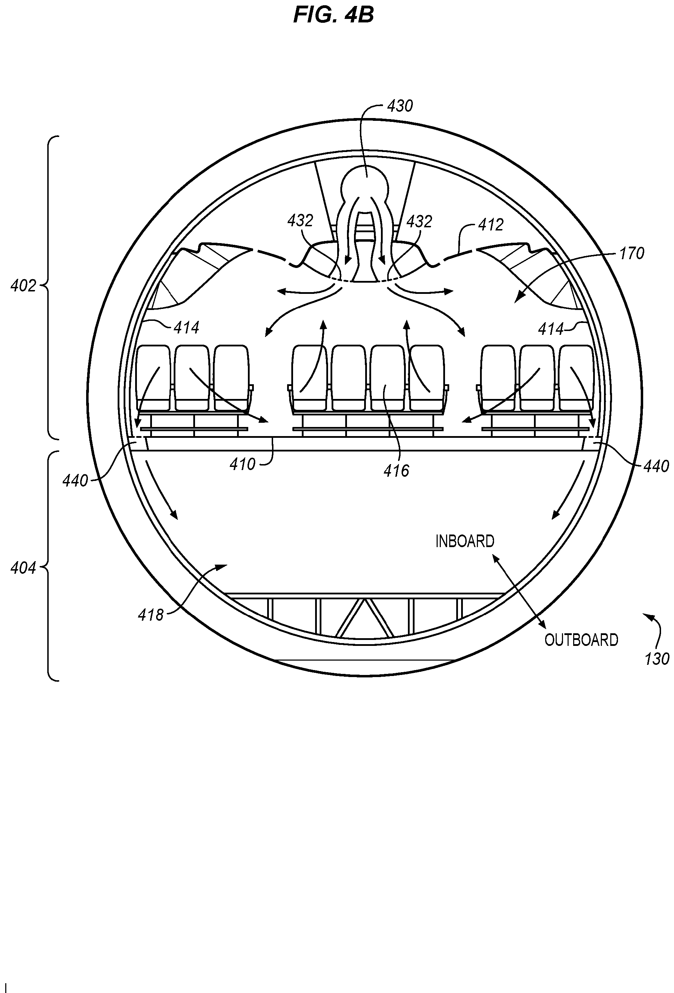

FIG. 4B is a cross-sectional view of aircraft 100 in an illustrative example. The view in FIG. 4B is across cut plane 4-4 in FIG. 1. Fuselage 130 includes an upper section 402, which includes a floor 410, a ceiling 412, and sidewalls 414 that form cabin 170, which includes seats 416 for the passengers. Fuselage 130 also includes a lower section 404, which includes a cargo area 418. FIG. 4B further illustrates an outboard direction that proceeds towards an external surface of aircraft 100, and an inboard direction that proceeds towards the interior (e.g., cabin 170) of aircraft 100.

Air distribution subsystem 211 includes overhead duct 430 that delivers conditioned air through cabin 170 or through one or more zones of cabin 170. There may be more or less overhead ducts 430 for air distribution subsystem 211 than is shown in FIG. 4B, and the overhead ducts 430 may be positioned in different locations in other examples. Airflow is released from overhead duct 430 into cabin 170 through one or more outlet vents 432. Although outlet vents 432 are shown as overhead vents in this example, outlet vents 432 may be disposed at different locations as desired. The arrows in FIG. 4B illustrate how the conditioned air circulates through cabin 170. Air is released from outlet vents 432 and circulates through cabin 170. The air is evacuated from cabin 170 through grills or exhaust vents 440. The exhaust air may be directed alongside or through the cargo area 418, where it may provide some heating or cooling. The exhaust air is then exhausted outboard through outflow valves (not shown) controlled to maintain the desired cabin pressure.

In FIG. 2, recirculation subsystem 213 is an optional system that recycles some exhaust air back into cabin 170 or back to ECU 210. Temperature control subsystem 214 is configured to control ECU 210 to discharge conditioned air at a desired temperature. Pressure control subsystem 215 controls the rate of change of cabin pressure during climb and descent of aircraft 100, and establishes the cabin pressure at cruising altitude to create a safe environment in cabin 170. The pressure inside cabin 170 is equivalent to an altitude, so the cabin pressure is referred to as a "cabin altitude". For example, if the pressure of the cabin is about 0.076 N/mm2 (11 lbs/in2), then the cabin altitude is about 2133m (7000 feet). This pressure is equivalent to what a human would experience if he/she were at an elevation of 2133m (7000 feet). The maximum cabin altitude allowed by transport category aircraft regulations is 2438m (8000 feet), so pressure control subsystem 215 attempts to maintain the pressure inside cabin 170 below that altitude during normal operation.

Another example of an oxygen supply subsystem 201 is an emergency oxygen system 204. Emergency oxygen system 204 is configured to supply oxygen to crew members and passengers in response to a loss of pressurization of cabin 170, which is referred to as a cabin depressurization event. Emergency oxygen system 204 includes a pressure sensor 220, which comprises a sensor configured to measure the pressure inside of cabin 170 and/or cockpit 160 of aircraft 100. Pressure sensor 220 is configured to detect a cabin decompression event on aircraft 100. For example, if the cabin altitude reaches or exceeds a threshold (e.g., 13048m, which corresponds to 10000 feet), then pressure sensor 220 may detect a cabin decompression event. Emergency oxygen system 204 may further include supply ducts 221, masks 222, and/or outlet vents 224. Masks 222 are configured to automatically deploy in response to a cabin decompression event, and includes a facial cup and elastic bands for securing mask 222 to the face of a passenger or crew member. Outlet vents 224 may be used in place of or in addition to masks 222 to supply oxygen to particular regions within cabin 170, such as in close proximity to seats 416 of aircraft 100. In one example, outlet vents 224 of emergency oxygen system 204 may include the outlet vents 432 of air distribution subsystem 211. In other examples, additional outlet vents 224 may be installed in close proximity to seats 416 (i.e., overhead or directly in front of seats 416) to provide an airflow directly toward passengers. Emergency oxygen system 204 is configured to automatically supply oxygen to cabin 170 through masks 222 and/or outlet vents 224 when the cabin altitude exceeds a threshold. Although not shown, emergency oxygen system 204 may further include one or more fans, one or more manifolds, hoses, piping, etc.

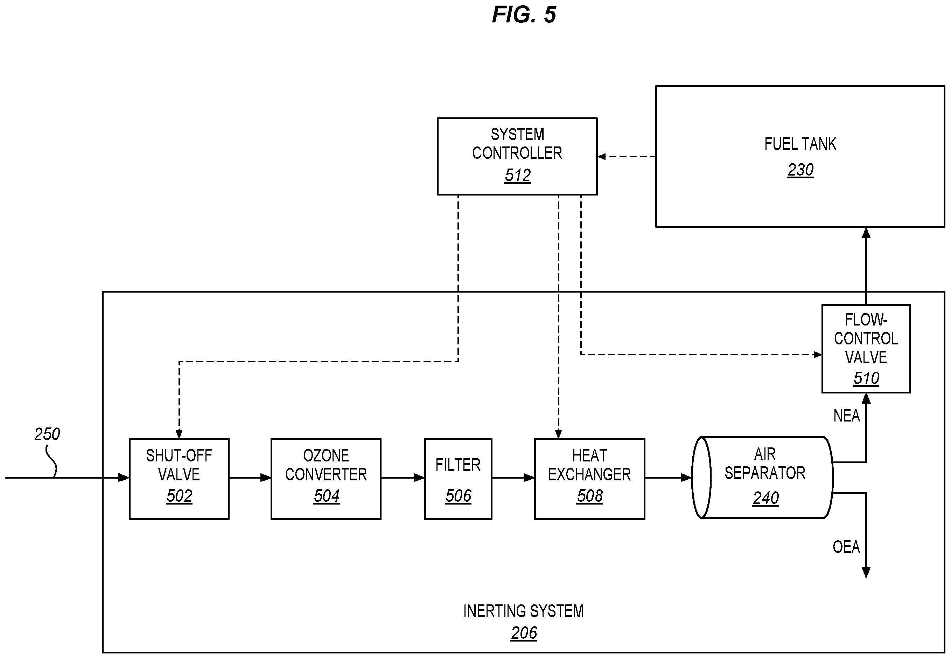

In the examples described herein, oxygen enriched air is provided to one or more of the oxygen supply subsystems 201 via an air separator. As shown in FIG. 2, aircraft 100 may further include an inerting system 206. Inerting system 206 is part of a Flammability Reduction System (FRS) for aircraft 100. FRS may be considered part of ECS 202, but is shown outside of ECS 202 in this example. Inerting system 206 is configured to decrease the probability of combustion of flammable materials stored in a fuel tank 230 of aircraft 100 by replacing the air in fuel tank 230 with an inert gas, such as nitrogen, nitrogen enriched air, steam, carbon dioxide, etc. Inerting system 206 feeds an inert gas into the ullage of fuel tank 230, which reduces the oxygen concentration of the ullage to below the combustion threshold. Thus, flammable vapors in fuel tank 230 are rendered inert, and will not ignite in the presence of an ignition source. Inerting system 206 includes an air separator 240 (also referred to as an air separation module), which is configured to separate a pressurized air stream into an inert gas (e.g., nitrogen enriched air (NEA)) and oxygen enriched air (OEA). In one example, air separator 240 may use fiber membranes to remove oxygen from a pressurized air stream, and generate nitrogen enriched air that is distributed to fuel tank 230. Inerting system 206 also includes other components, one of example of which is shown in FIG. 5

FIG. 5 is a schematic diagram of inerting system 206 in an illustrative example. Inerting system 206 receives pressurized air stream 250 through a shut-off valve 502. Pressurized air stream 250 travels through ozone (O3) converter 504, which is a catalytic converter that converts triatomic oxygen (ozone) to biatomic or "regular" oxygen to protect other elements in inerting system 206 from oxidation. Pressurized air stream 250 then travels through one or more filters 506 to a heat exchanger 508, which cools the pressurized air stream 250. For instance, bleed air is really hot when it comes off engine 150, and heat exchanger 508 cools the bleed air to protect other elements of inerting system 206 and increase their effectiveness. Pressurized air stream 250 then travels to air separator 240, which physically separates an inert gas (e.g., nitrogen (N2)) in the air. This separation may be accomplished by running the pressurized air stream 250 through semipermeable fibrous tubes. Because almost all of the non-N2 molecules present are smaller than the N2 molecules, those smaller molecules pass through the membranes as oxygen enriched air (OEA); leaving the nitrogen enriched air (NEA) that is fed to fuel tank 230 through a flow-control valve 510. A system controller 512 receives sensor inputs to control operation of flow-control valve 510, shut-off valve 502, heat exchanger 508, and/or other elements.

In the example shown in FIG. 2, air separator 240 receives the pressurized air stream 250 from an engine 150 of aircraft 100 as bleed air. In a Boeing 737 or 777, for example, bleed air from an engine may be fed to air separator 240 of inerting system 206. A regulator 243 (e.g., including a flow control valve) may be installed upstream from inerting system 206 to control or regulate the bleed air that is fed to air separator 240. Air separator 240 separates the pressurized air stream 250 into an inert gas 252 and oxygen enriched air 254. Air separator 240 feeds the inert gas 252 to fuel tank 230, and feeds the oxygen enriched air 254 to an oxygen supply subsystem 201 through a regulator 244.

Regulator 244 is configured to control or regulate the oxygen enriched air 254 that is fed to an oxygen supply subsystem 201. An oxygen sensor 246 is configured to measure oxygen content or an oxygen level in an oxygen supply subsystem 201. For example, oxygen sensor 246 may measure the oxygen content in air distribution subsystem 211, emergency oxygen system 204, etc. Oxygen sensor 246 is configured to provide a signal to regulator 244 and/or a controller 262 indicating the oxygen content. Controller 262 is configured to determine how much oxygen enriched air 254 to supply to oxygen supply subsystem 201 based on the oxygen content measured by oxygen sensor 246, and control regulator 244 accordingly. Thus, aircraft 100 includes a closed-loop system for supplying oxygen enriched air 254 to an oxygen supply subsystem 201.

Regulator 244 may feed the oxygen enriched air 254 directly to an oxygen supply subsystem 201, such as to air distribution subsystem 211, emergency oxygen system 204, and/or another subsystem. In this example, regulator 244 may feed the oxygen enriched air 254 to a manifold 260, which is configured to control where the oxygen enriched air 254 is fed. Manifold 260 is coupled to controller 262, which is configured to control manifold 260 in response to input from pressure sensor 220 and/or other devices or instruments. For example, manifold 260 may direct the oxygen enriched air 254 to air distribution subsystem 211 under normal operating conditions (e.g., cabin altitude is below a threshold), may direct the oxygen enriched air 254 to air distribution subsystem 211 in response to a cabin decompression event (e.g., the cabin altitude is above a threshold), may direct the oxygen enriched air 254 to emergency oxygen system 204 in response to a cabin decompression event, or may direct the oxygen enriched air 254 to both or other subsystems. Controller 262 may also control regulators 243-244 or other devices, and may receive input from pressure sensor 220, oxygen sensor 246, and/or other devices or instruments.

In the example described above, the oxygen enriched air 254 from inerting system 206 is advantageously reused for air distribution subsystem 211, emergency oxygen system 204, and/or another subsystem. In a traditional aircraft, the oxygen enriched air 254 from an inerting system was dumped out a ram duct and wasted. The example described above uses the oxygen enriched air 254 from inerting system 206 in an effective manner for other subsystems of aircraft 100. For example, the oxygen enriched air 254 may be fed to emergency oxygen system 204 (or possibly to air distribution subsystem 211) as an oxygen supply during a cabin decompression event, which replaces traditional emergency systems (i.e., a chemical oxygen generator or gaseous manifolds). One technical benefit is that emergency oxygen system 204 has an unlimited oxygen supply as long as aircraft 100 is airborne, where traditional emergency systems had limited supplies (e.g., fifteen to twenty minutes). Another benefit is that traditional emergency systems do not need to be installed on aircraft 100, which may reduce the weight of aircraft 100. Another benefit is that a chemical oxygen generator uses an exothermic reaction, which may be a fire risk and may produce unhealthy vapors. Yet another benefit is that the oxygen supply is controllable unlike traditional emergency oxygen systems. Additionally or alternatively, the oxygen enriched air 254 may be fed to air distribution subsystem 211 to enhance the oxygen content of the air in cockpit 160 and/or cabin 170. One technical benefit is that the air quality on aircraft 100 may be enhanced.

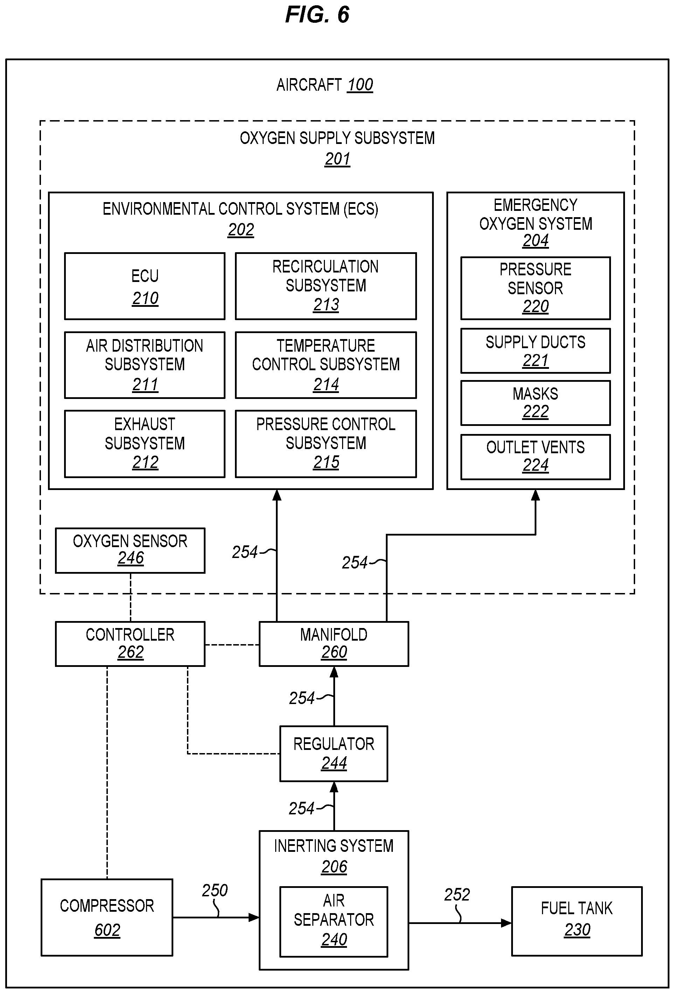

FIG. 6 is a schematic diagram of aircraft 100 in another illustrative example. In this example, air separator 240 of inerting system 206 receives pressurized air stream 250 from a compressor 602 instead of a compressor stage of engine 150. Compressor 602 is an auxiliary device that generates pressurized air, and may be electrical, hydraulic, pneumatic, etc. For example, a Boeing 787 may include an electric-driven compressor that supplies a pressurized air stream to inerting system 206 instead of using bleed air from an engine. Controller 262 may control compressor 602 to regulate the air that is fed to air separator 240.

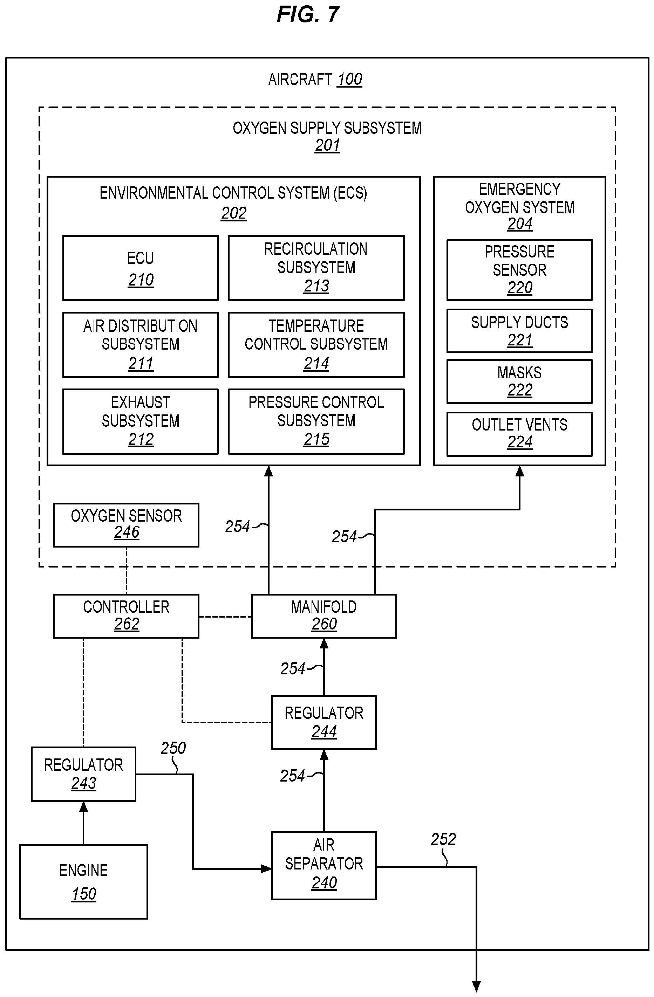

FIG. 7 is a schematic diagram of aircraft 100 in another illustrative example. In this example, aircraft 100 includes a stand-alone air separator 240, which is separate or independent from an inerting system. Air separator 240 receives the pressurized air stream 250 from an engine 150 of aircraft 100 as bleed air. Air separator 240 separates the pressurized air stream 250 into an inert gas 252 and oxygen enriched air 254. Air separator 240 feeds the oxygen enriched air 254 to an oxygen supply subsystem 201 through regulator 244, and dumps the inert gas 252.

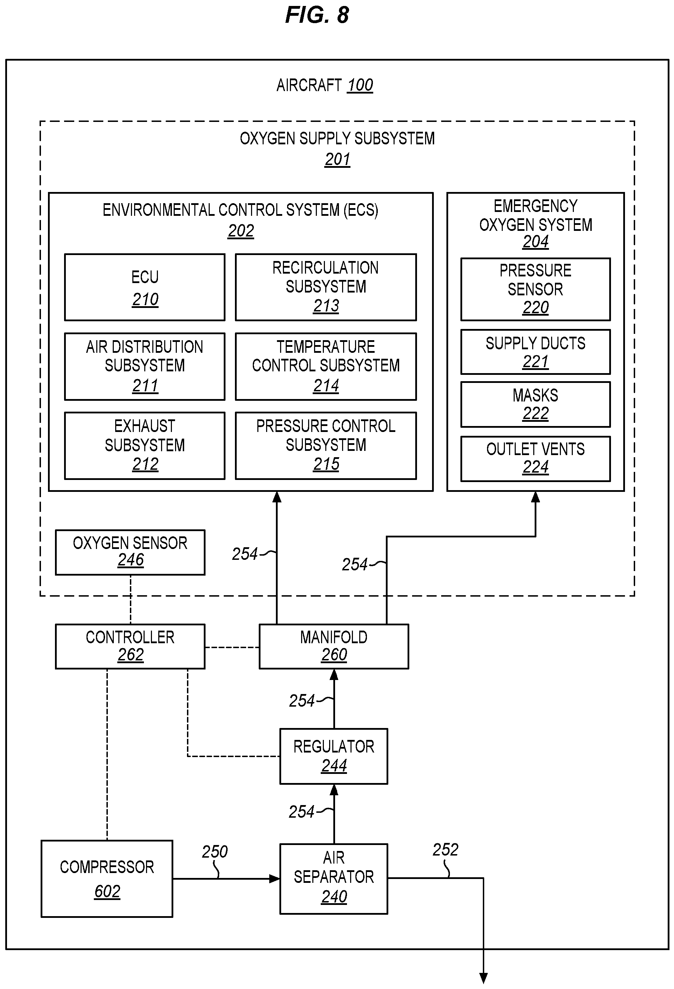

FIG. 8 is a schematic diagram of aircraft 100 in another illustrative example. In this example, aircraft 100 again includes a stand-alone air separator 240. Air separator 240 receives the pressurized air stream 250 from a compressor 602 instead of a compressor stage of engine 150.

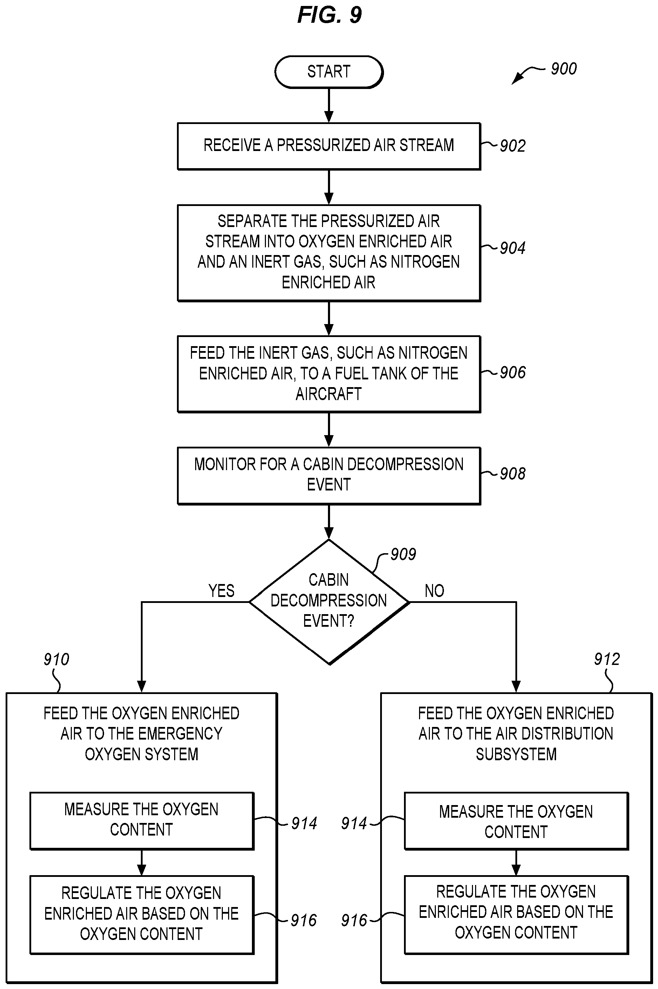

FIG. 9 is a flow chart illustrating a method 900 of supplying oxygen enriched air to an aircraft in an illustrative example not falling under the scope of the appended claims. The steps of method 900 will be described with respect to aircraft 100 of FIG. 2 or 6, although one skilled in the art will understand that the methods described herein may be performed on other types of aircraft. The steps of the methods described herein are not all inclusive and may include other steps not shown The steps for the flow charts shown herein may also be performed in an alternative order.

Air separator 240 on aircraft 100 receives a pressurized air stream 250 (step 902). For example, air separator 240 may receive the pressurized air stream 250 as bleed air from an engine 150 of aircraft 100 (see FIG. 2). In another example, air separator 240 may receive the pressurized air stream 250 from a compressor 602 on aircraft 100 (see FIG. 6). Air separator 240 separates the pressurized air stream 250 into oxygen enriched air 254 and an inert gas 252, such as nitrogen enriched air (step 904). Air separator 240 feeds the inert gas 252 to a fuel tank 230 of aircraft 100 (step 906). This assists in flammability reduction by replacing the air in fuel tank 230 with the inert gas.

The oxygen enriched air 254 may be reused in an oxygen supply subsystem 201 of aircraft 100. For instance, pressure sensor 220 (and/or an associated controller) monitors for a cabin decompression event (step 908). When pressure sensor 220 detects a cabin decompression event on aircraft 100 (e.g., cabin altitude exceeds a threshold), manifold 260 feeds the oxygen enriched air 254 from air separator 240 to emergency oxygen system 204 (step 910). When there is no cabin decompression event, manifold 260 may feed the oxygen enriched air 254 to air distribution subsystem 211 (step 912). In either case, oxygen sensor 246 may measure the oxygen content in emergency oxygen system 204 and/or air distribution subsystem 211 (step 914), and regulator 244 may regulate the oxygen enriched air 254 fed to emergency oxygen system 204 and/or air distribution subsystem 211 based on the oxygen content (step 916).

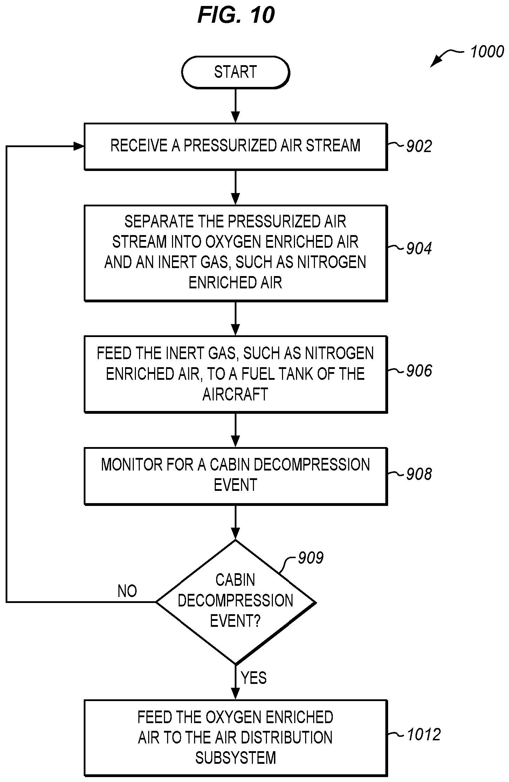

FIG. 10 is a flow chart illustrating another method 1000 of supplying oxygen enriched air to an aircraft in an illustrative example not falling under the scope of the appended claims. Steps 902-909 of method 1000 are similar to that described above in FIG. 9. When pressure sensor 220 detects a cabin decompression event on aircraft 100, manifold 260 feeds the oxygen enriched air 254 from air separator 240 to air distribution subsystem 211 (step 1012). Thus, the oxygen concentration in cabin 170 may be enriched by the oxygen enriched air 254 during a cabin decompression event. Step 1012 may be performed concurrently with step 910 of method 900, or may be performed in place of step 910.

Methods 900-1000 advantageously use the "waste" oxygen from air separator 240 for emergency oxygen system 204 and/or air distribution subsystem 211. Thus, traditional chemical oxygen generators and gaseous manifolds may not be needed for a cabin decompression event. Also, methods 900-1000 may use the "waste" oxygen from air separator 240 to supplement the air delivered to cabin 170 by air distribution subsystem 211 to improve air quality in aircraft 100.

Any of the various elements shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

## Claims

1. An aircraft (100) comprising
an oxygen supply subsystem (201) configured to supply oxygen to a cockpit and/or cabin of the aircraft, the oxygen supply subsystem comprising: an emergency oxygen system (204) including a pressure sensor (220) configured to detect a cabin decompression event on the aircraft; an environmental control system ECS (202) including an environmental control unit ECU (210) and an air distribution subsystem (211) configured to distribute conditioned air from the ECU to the cockpit and/or cabin of the aircraft;
an air separator (210) configured to receive a pressurized air stream, to separate the pressurized air stream into oxygen enriched air and an inert gas;
a controller (262) arranged to receive input from the pressure sensor and an oxygen sensor configured to measure oxygen content at the oxygen supply subsystem; and
a manifold (260) coupled to the controller, wherein in response to the cabin decompression event, the controller is configured to control the manifold responsive to input from the pressure sensor and the oxygen sensor to feed the oxygen enriched air from the air separator to both the emergency oxygen system and the air distribution subsystem.

2. The aircraft of claim 1 wherein:
the air separator is part of an inerting system (206) configured to feed the inert gas to a fuel tank (230) of the aircraft.

3. The aircraft of claim 1 wherein the emergency oxygen system includes:
masks (222) configured to automatically deploy in response to the cabin decompression event.

4. The aircraft of claim 1 wherein the emergency oxygen system includes:
outlet vents (285) configured to supply oxygen to particular regions within the cabin in close proximity to seats in response to the cabin decompression event.

5. The aircraft of any one of the preceding claims, further comprising:
the oxygen sensor (246) configured to measure oxygen content at the oxygen supply subsystem; and
a regulator (244) configured to regulate, based on the oxygen content, the oxygen enriched air fed to the oxygen supply subsystem.

6. The aircraft of any one of the preceding claims, wherein:
the pressurized air stream comprises bleed air from an engine (150) of the aircraft.

7. The aircraft of any one of the claims 1-5, wherein:
the pressurized air stream comprises compressed air from a compressor on the aircraft.

8. The aircraft of any one of claims 1-7, in which the inert gas is nitrogen.

9. The aircraft of any one of claims 1-8, in which the oxygen supply subsystem includes one or more inlets (281) configured to receive a supply of oxygen.

10. The aircraft of any one of claims 1-8, in which the oxygen supply subsystem includes one or more fans (282) to create or control an airflow that includes the oxygen.

11. The aircraft of any one of claims 1-10, in which the oxygen supply subsystem includes one or more ducts (283) configured to convey an airflow to locations of cockpit (160) and/or cabin (170).

12. The aircraft of any one of claim 11, in which the oxygen supply subsystem includes one or more additional manifolds (284) configured to direct airflows to ducts (283).

13. A method comprising:
receiving a pressurized air stream at an air separator (240) on an aircraft (100);
separating the pressurized air stream into oxygen enriched air and nitrogen enriched air at the air separator;
feeding the nitrogen enriched air to a fuel tank (230) of the aircraft;
detecting, by a pressure sensor (220), a cabin decompression event on the aircraft;
controlling, by a controller (252), a manifold (260) responsive to input from the pressure sensor and an oxygen sensor (246) configured to measure oxygen content at an oxygen supply subsystem (201); and
feeding, by the manifold, the oxygen enriched air to both an emergency oxygen system (204) and an air distribution subsystem (211) of an oxygen supply subsystem (201) configured to distribute conditioned air from an environmental control unit ECU (210) of an environmental control system ECS (202) through a cockpit and/or cabin of the aircraft in response to the cabin decompression event.

14. The method of claim 13 further comprising:
further feeding the oxygen enriched air to the air distribution subsystem of the aircraft also when the cabin decompression event is not detected.

15. The method of claim 14 further comprising:
measuring oxygen content in at least one of the emergency oxygen system and the air distribution subsystem; and
regulating, based on the oxygen content, the oxygen enriched air fed to the at least one of the emergency oxygen system and the air distribution subsystem.

## Patentansprüche

1. Flugzeug (100), das ein Sauerstoffversorgungsteilsystem (201) umfasst, das dazu ausgelegt ist, einem Cockpit und/oder einer Kabine des Flugzeugs Sauerstoff zuzuführen, wobei das Sauerstoffversorgungsteilsystem Folgendes umfasst:
ein Notsauerstoffsystem (204), das einen Drucksensor (220) beinhaltet, der dazu ausgelegt ist, ein Kabinendekompressionsereignis in dem Flugzeug zu erkennen;
ein Umgebungssteuerungssystem ECS (202), das eine Umgebungssteuereinheit ECU (210) und ein Luftverteilungsteilsystem (211) beinhaltet, das dazu ausgelegt ist, klimatisierte Luft aus der ECU an das Cockpit und/oder die Kabine des Flugzeugs zu verteilen;
eine Lufttrennvorrichtung (210), die dazu ausgelegt ist, einen Druckluftstrom aufzunehmen, um den Druckluftstrom in sauerstoffangereicherte Luft und ein Inertgas zu trennen;
eine Steuervorrichtung (262), die dazu ausgelegt ist, eine Eingabe aus dem Drucksensor und einem Sauerstoffsensor zu empfangen, der dazu ausgelegt ist, den Sauerstoffgehalt in dem Sauerstoffversorgungsteilsystem zu messen; und
einen Verteiler (260), der mit der Steuervorrichtung gekoppelt ist, wobei die Steuervorrichtung als Reaktion auf das Kabinendekompressionsereignis dazu ausgelegt ist, den Verteiler als Reaktion auf eine Eingabe aus dem Drucksensor und dem Sauerstoffsensor zu steuern, um die sauerstoffangereicherte Luft aus der Lufttrennvorrichtung sowohl dem Notsauerstoffsystem als auch dem Luftverteilungsteilsystem zuzuführen.

2. Flugzeug nach Anspruch 1, wobei:
die Lufttrennvorrichtung Teil eines Inertisierungssystems (206) ist, das dazu ausgelegt ist, das Inertgas einem Kraftstofftank (230) des Flugzeugs zuzuführen.

3. Flugzeug nach Anspruch 1, wobei das Notsauerstoffsystem Folgendes beinhaltet:
Masken (222), die dazu ausgelegt sind, sich als Reaktion auf das Kabinendekompressionsereignis automatisch zu entfalten.

4. Flugzeug nach Anspruch 1, wobei das Notsauerstoffsystem Folgendes beinhaltet:
Auslassöffnungen (285), die dazu ausgelegt sind, als Reaktion auf das Kabinendekompressionsereignis bestimmten Bereichen innerhalb der Kabine in unmittelbarer Nähe zu Sitzen Sauerstoff zuzuführen.

5. Flugzeug nach einem der vorhergehenden Ansprüche, ferner umfassend:
wobei der Sauerstoffsensor (246) dazu ausgelegt ist, den Sauerstoffgehalt an dem Sauerstoffversorgungsteilsystem zu messen; und
einen Regler (244), der dazu ausgelegt ist, die dem Sauerstoffversorgungsteilsystem zugeführte sauerstoffangereicherte Luft basierend auf dem Sauerstoffgehalt zu regeln.

6. Flugzeug nach einem der vorhergehenden Ansprüche, wobei:
der Druckluftstrom Zapfluft aus einem Triebwerk (150) des Flugzeugs umfasst.

7. Flugzeug nach einem der Ansprüche 1-5, wobei:
der Druckluftstrom Druckluft aus einem Kompressor im Flugzeug umfasst.

8. Flugzeug nach einem der Ansprüche 1-7, wobei das Inertgas Stickstoff ist.

9. Flugzeug nach einem der Ansprüche 1-8, wobei das Sauerstoffversorgungsteilsystem einen oder mehrere Einlässe (281) beinhaltet, die dazu ausgelegt sind, eine Zufuhr von Sauerstoff aufzunehmen.

10. Flugzeug nach einem der Ansprüche 1-8, wobei das Sauerstoffversorgungsteilsystem ein oder mehrere Lüfter (282) zum Erzeugen oder Steuern eines Luftstroms beinhaltet, der den Sauerstoff beinhaltet.

11. Flugzeug nach einem der Ansprüche 1-10, wobei das Sauerstoffversorgungsteilsystem einen oder mehrere Kanäle (283) beinhaltet, die dazu ausgelegt sind, einen Luftstrom zu Positionen des Cockpits (160) und/oder der Kabine (170) zu leiten.

12. Flugzeug nach einem des Anspruchs 11, wobei das Sauerstoffversorgungsteilsystem einen oder mehrere zusätzliche Verteiler (284) beinhaltet, die dazu ausgelegt sind, Luftströme zu Kanälen (283) zu leiten.

13. Verfahren, umfassend:
Empfangen eines Druckluftstroms an einer Lufttrennvorrichtung (240) an einem Flugzeug (100);
Trennen des Druckluftstroms in sauerstoffangereicherte Luft und stickstoffangereicherte Luft in der Lufttrennvorrichtung;
Zuführen der stickstoffangereicherten Luft zu einem Kraftstofftank (230) des Flugzeugs;
Erkennen, durch einen Drucksensor (220), eines Kabinendekompressionsereignisses in dem Flugzeug;
Steuern, durch eine Steuervorrichtung (252), eines Verteilers (260), der auf eine Eingabe aus dem Drucksensor reagiert, und eines Sauerstoffsensors (246), der dazu ausgelegt ist, den Sauerstoffgehalt an einem Sauerstoffversorgungsteilsystem (201) zu messen;
und
Zuführen, durch den Verteiler, der sauerstoffangereicherten Luft sowohl zu einem Notsauerstoffsystem (204) als auch zu einem Luftverteilungsteilsystem (211) eines Sauerstoffversorgungsteilsystems (201), das dazu ausgelegt ist, klimatisierte Luft aus einer Umgebungssteuereinheit ECU (210) eines Umgebungssteuerungssystems ECS (202) durch ein Cockpit und/oder eine Kabine des Flugzeugs als Reaktion auf das Kabinendekompressionsereignis zu verteilen.

14. Verfahren nach Anspruch 13, ferner umfassend:
weiteres Zuführen der sauerstoffangereicherten Luft zum Luftverteilungsteilsystem des Flugzeugs auch dann, wenn das Kabinendekompressionsereignis nicht erkannt wird.

15. Verfahren nach Anspruch 14, ferner umfassend:
Messen des Sauerstoffgehalts in mindestens einem von dem Notsauerstoffsystem und dem Luftverteilungsteilsystem; und
Regeln der dem mindestens einem von dem Notsauerstoffsystem und dem Luftverteilungsteilsystem zugeführten sauerstoffangereicherten Luft basierend auf dem Sauerstoffgehalt.

## Revendications

1. Aéronef (100), comprenant un sous-système d'approvisionnement en oxygène (201) configuré pour effectuer l'approvisionnement en oxygène à un poste de pilotage et/ou une cabine de l'aéronef, le sous-système d'approvisionnement en oxygène comprenant :
un système d'oxygène d'urgence (204) incluant un capteur de pression (220) configuré pour détecter un événement de décompression de cabine sur l'aéronef ;
un système de contrôle d'environnement ECS (202) incluant une unité de contrôle d'environnement ECU (210) et un sous-système de distribution d'air (211) configuré pour distribuer de l'air climatisé depuis l'ECU au poste de pilotage et/ou à la cabine de l'aéronef ;
un séparateur d'air (210) configuré pour recevoir un courant d'air sous pression, pour séparer le courant d'air sous pression en air enrichi en oxygène et en un gaz inerte ;
un appareil de commande (262) agencé pour recevoir une entrée en provenance du capteur de pression et d'un capteur d'oxygène configuré pour mesurer la teneur en oxygène au sous-système d'approvisionnement en oxygène ; et
une rampe (260) couplée à l'appareil de commande, dans lequel, en réponse à l'événement de décompression de cabine, l'appareil de commande est configuré pour commander la rampe en réponse à une entrée en provenance du capteur de pression et du capteur d'oxygène pour effectuer l'alimentation en l'air enrichi en oxygène depuis le séparateur d'air aux deux du système d'oxygène d'urgence et du sous-système de distribution d'air.

2. Aéronef de la revendication 1, dans lequel :
le séparateur d'air fait partie d'un système d'inertage (206) configuré pour effectuer l'alimentation en le gaz inerte à un réservoir de carburant (230) de l'aéronef.

3. Aéronef de la revendication 1, dans lequel le système d'oxygène d'urgence inclut :
des masques (222) configurés pour se déployer automatiquement en réponse à l'événement de décompression de cabine.

4. Aéronef de la revendication 1, dans lequel le système d'oxygène d'urgence inclut :
des évents de sortie (285) configurés pour effectuer l'approvisionnement en oxygène à des régions particulières à l'intérieur de la cabine, à proximité étroite de sièges, en réponse à l'événement de décompression de cabine.

5. Aéronef de l'une quelconque des revendications précédentes, comprenant en outre :
le capteur d'oxygène (246) configuré pour mesurer une teneur en oxygène au sous-système d'approvisionnement en oxygène ; et
un régulateur (244) configuré pour réguler, sur la base de la teneur en oxygène, l'air enrichi en oxygène en lequel l'alimentation est effectuée au sous-système d'approvisionnement en oxygène.

6. Aéronef de l'une quelconque des revendications précédentes, dans lequel :
le courant d'air sous pression comprend de l'air de prélèvement provenant d'un moteur (150) de l'aéronef.

7. Aéronef de l'une quelconque des revendications 1 à 5, dans lequel :
le courant d'air sous pression comprend de l'air comprimé provenant d'un compresseur sur l'aéronef.

8. Aéronef de l'une quelconque des revendications 1 à 7, dans lequel le gaz inerte est de l'azote.

9. Aéronef de l'une quelconque des revendications 1 à 8, dans lequel le sous-système d'approvisionnement en oxygène inclut une ou plusieurs entrées (281) configurées pour recevoir un approvisionnement en oxygène.

10. Aéronef de l'une quelconque des revendications 1 à 8, dans lequel le sous-système d'approvisionnement en oxygène inclut un ou plusieurs ventilateurs (282) pour créer ou contrôler un écoulement d'air qui inclut l'oxygène.

11. Aéronef de l'une quelconque des revendications 1 à 10, dans lequel le sous-système d'approvisionnement en oxygène inclut une ou plusieurs conduites (283) configurées pour transporter un écoulement d'air jusqu'à des emplacements du poste de pilotage (160) et/ou de la cabine (170).

12. Aéronef de l'une quelconque de la revendication 11, dans lequel le sous-système d'approvisionnement en oxygène inclut une ou plusieurs rampes supplémentaires (284) configurées pour diriger des écoulements d'air jusqu'à des conduites (283).

13. Procédé, comprenant :
la réception d'un courant d'air sous pression, à un séparateur d'air (240) sur un aéronef (100) ;
la séparation du courant d'air sous pression en air enrichi en oxygène et en air enrichi en azote, au séparateur d'air ;
l'alimentation en l'air enrichi en azote à un réservoir de carburant (230) de l'aéronef ;
la détection, par un capteur de pression (220), d'un événement de décompression de cabine sur l'aéronef ; la commande, par un appareil de commande (252), d'une rampe (260), en réponse à une entrée provenant du capteur de pression et d'un capteur d'oxygène (246) configuré pour mesurer une teneur en oxygène à un sous-système d'approvisionnement en oxygène (201) ;
et
l'alimentation, par la rampe, en l'air enrichi en oxygène aux deux d'un système d'oxygène d'urgence (204) et d'un sous-système de distribution d'air (211) d'un sous-système d'approvisionnement en oxygène (201) configuré pour distribuer de l'air climatisé depuis une unité de contrôle d'environnement ECU (210) d'un système de contrôle d'environnement ECS (202) à travers un poste de pilotage et/ou une cabine de l'aéronef, en réponse à l'événement de décompression de cabine.

14. Procédé de la revendication 13, comprenant en outre :
l'alimentation additionnelle en l'air enrichi en oxygène au sous-système de distribution d'air de l'aéronef également lorsque l'événement de décompression de cabine n'est pas détecté.

15. Procédé de la revendication 14, comprenant en outre :
la mesure d'une teneur en oxygène dans au moins un du système d'oxygène d'urgence et du sous-système de distribution d'air ; et
la régulation, sur la base de la teneur en oxygène, de l'air enrichi en oxygène en lequel l'alimentation est effectuée à l'au moins un du système d'oxygène d'urgence et du sous-système de distribution d'air.
